# EUROPÄISCHE PATENTSCHRIFT

(11) **EP 0 511 514 B1**
(45) Veröffentlichungstag und Bekanntmachung des Hinweises auf die Patenterteilung: **13.08.1997**
(21) Anmeldenummer: 92105734.5
(22) Anmeldetag: 02.04.1992
(51) Int. Cl.: H04Q 11/04

(54) **Schaltungsanordnung zur Datenumsetzung**
Data conversion circuit
Circuit pour la conversion de données

(30) Priorität: 29.04.1991 DE 4113987
(43) Veröffentlichungstag der Anmeldung: 04.11.1992
(73) Patentinhaber: SIEMENS AKTIENGESELLSCHAFT, 80333 München (DE)
(72) Erfinder: Kaufmann, Peter, W-8031 Gilching (DE)

(56) Entgegenhaltungen:
- EP-A- 0 358 597
- EP-A- 0 367 270
- COMPUTER NETWORKS AND ISDN SYSTEMS Bd. 17, Nr. 2, Juli 1989, AMSTERDAM NL Seiten 149 - 152 J. VAN TILL: 'The A-ISDN Proposal to Bridge "Personal Computers" and "ISDN".'
- NTG-Fachtagung 'Wege zum integrierten Kommunikationsnetz', 25.-27.03.1985, Berlin, DE, NTG-Fachtagung Nr. 88, pages 277-283, VDE-Verlag, Berlin, DE; F. Kaderali / D. Dietrich: 'Diensteintegration in Nebenstellenanlagen.'
- First Pan European Conference on ISDN 'ISDN EUROPE 86', 05.-07.11.1986, Basel, CH, pages 45-51, IGI Europe, Boston, US; P. Schulthess / K. Froitzheim: 'Experience with an integrated Digital PBX in a University Environment.'
- AT &T TECHNOLOGY Bd. 1, Nr. 1, 1986, Seiten 36 - 37 L. K. PEDERSON / J. S. THOMPSON: 'The PC/PBX Connection.'
- FUNKSCHAU Bd. 6, Nr. 21, Oktober 1989, MÜNCHEN (DE), Seiten 40-42 'Industriestandards für die Sprache der Modems.'

## Beschreibung

In der Kommunikationstechnik, insbesondere in der Telekommunikation, findet der Personal Computer in geschäftlichen und privaten Bereichen eine immer häufigere und vielseitigere Anwendung. Eine komfortable Benutzeroberfläche ermöglicht eine unkomplizierte Bedienung und Nutzung des Personal Computers. In der Telekommunikation kann der Personal Computer z.B. mit einem Teilnehmerendgerät (Telephon, Vermittlungsanlage) gekoppelt werden. Durch diese Kombination können die in der Telekommunikationstechnik möglichen Serviceleistungen (z.B. Rufnummernregister, computergesteuerte Wahlhilfe, Telephonmanager) für den Telekommunikationsteilnehmer transparenter und bedienerfreundlicher ausgestaltet werden. Bei der Kombination von Personal Computer - Teilnehmerendgerät ist es für den Telekommunikationsteilnehmer möglich, die im Personal Computer gespeicherten Rufnummern eines anderen Telekommunikationsteilnehmers aus einem Rufnummernregister auszuwählen und einen Verbindungsaufbau mit dem Personal Computer einzuleiten. Besonders hilfreich bei einer Anwahl eines Telekommunikationsteilnehmers ist es, wenn Rufnummern aus einem elektronischen Telephonbuch am Personal Computer ausgewählt und Verbindungen zu anderen Telekommunikationsteilnehmern aufgebaut werden können. Eine dazu geeignete Anordnung wird zum Beispiel in der EP-A-0 385 597 beschrieben.

Die Erfindung bezieht sich auf eine Schaltungsanordnung zur Datenumsetzung bei einer Datenübertragung zwischen einer seriellen Datenschnittstelle eines Personal Computers und einer seriellen Datenschnittstelle einer Kommunikationseinrichtung.

Bei einer Kombination eines Personal Computers mit einem Teilnehmerendgerät wie z.B. einer Vermittlungsanlage oder einem Komforttelephon mit mehreren Funktionstasten sind zusätzliche Übertragungswege innerhalb der Gerätekombination nötig. Aufgrund des Zusammenwirkens des Personal Computers mit der Kommunikationseinrichtung werden Kommunikationsprozeduren erforderlich. Dies erfordert eine dauerhafte Belegung einer V.24 Datenschnittstelle am Personal Computer.

Bisher war es üblich, bei einer mit dem Personal Computer durchgeführten Rufnummernwahl spezielle Modem (Hayes Modem) zu verwenden. Diese Modem werden dabei z.B. an einem Übergabepunkt zwischen einem öffentlichen Vermittlungsnetz und privater Leitungsführung installiert. Eine weitere Möglichkeit, ein Hayes-Modem systemtechnisch bei der genannten Kombination von Personal Computer und Teilnehmerendgerät anzuordnen, ist, daß das Hayes-Modem auf einer PC-Karte integriert und an einem freien Karten-Steckplatz im Personal Computer eingefügt wird. Eine spezielle PC-Karte, z.B. ein Einbaumodem mit angeschlossenem Telephon, übernimmt die Funktion des Hayes-Modem. Die Belegung eines PC-Kartensteckplatzes und/oder die Belegung von mindestens einer definierten Datenschnittstelle schränkt die Verwendungsmöglichkeiten des Personal Computers erheblich ein. So muß z.B. zugunsten einer telekommunikationsorientierten Nutzung des Personal Computers auf den Einbau von Schaltkreisen zur Systemerweiterung, die auf steckbaren PC-Karten implementierbar sind, verzichtet werden.

Der Erfindung liegt die Aufgabe zugrunde, einen Weg zu zeigen, unter möglichst geringer hardware- und/oder softwaremäßiger Belastung eines Personal Computers eine Anwahl von Telekommunikationsteilnehmern und die Steuerung von Kommunikationsprozeduren aus einem mit der Telekommunikationseinrichtung verbundenen Personal Computer zu ermöglichen.

Die Aufgabe wird durch die im kennzeichnenden Teil des Patentanspruchs 1 angegebenen Merkmale gelöst.

Die Erfindung zeichnet sich durch den Vorteil aus, daß ohne hardwaremäßige Zusatzeinrichtung in einem Personal Computer eine Anwahl eines Telekommunikationsteilnehmers sowie Kommunikationsprozeduren zwischen einem Personal Computer und einem Teilnehmerendgerät möglich sind. Ein PC-Kartensteckplatz wird nicht belegt. Eine Einschränkung im Ausbau des Personal Computers (z.B. Graphik-Karte, Speicherkarte... ) oder ein Verzicht auf Peripheriegeräte aufgrund eines permanent belegten PC-Kartensteckplatzes oder einer speziellen Datenschnittstelle ist nicht nötig. Darüber hinaus ist es besonders vorteilhaft, systemübergreifende Prozeduren wie z.B. die Steuerung oder Abfrage von Funktionstasten eines an einem Personal Computer angeschlossenen Teilnehmerendgerätes zu erreichen. Die Datenübertragung zwischen dem Personal Computer und der Kommunikationseinrichtung erfolgt dabei in vorteilhafter Weise über nur eine serielle Datenschnittstelle am Personal Computer. Desweiteren werden bei einer Betriebssystemstörung des Personal Computers die oben erwähnten Leistungsmerkmale nicht durch den Ausfall des Personal Computers blockiert. Ein unkompliziertes Lösen einer Steckverbindung an der Datenschnittstelle am gestörten Personal Computer und ein neues Verbinden der Steckverbindung mit einer Datenschnittstelle an einem betriebsfähigen Personal Computer ermöglicht eine sofortige Weiternutzung der beschriebenen Leistungsmerkmale.

Eine weitere Ausgestaltung der Erfindung ist, daß der Eingang des Mikroprozessormoduls mit Daten, die den Hayes-Kommandos entsprechen, beaufschlagbar ist, und das Mikroprozessormodul die Daten in eine der Telekommunikationseinrichtung angepaßte Impulsfolge umsetzt, so daß über die an eine Vermittlungsanlage angeschlossene Telekommunikationseinrichtung eine Verbindung zu anderen Teilnehmerendgeräten oder Datenverarbeitungsanlagen erreicht wird.

Eine Weiterbildung der Erfindung besteht darin, daß das Mikroprozessormodul durch einen Befehlsmodus transparent schaltbar ist, was den Vorteil mit sich bringt, daß zwischen der Telekommunikationseinrichtung und dem angeschlossenen Personal Computer eine breitere Signalisierung als die bekannten Hayes-Kommandos möglich ist. Eine Steuerung komplexerer Prozeduren einschließlich der Statusabfragen von Ergänzungsleistungsmerkmalen wird dadurch möglich. Dies bringt den Vorteil mit, daß bei entsprechender Ansteuerung eine erweiterte Benutzeroberfläche für das Teilnehmerendgerät erreicht wird. Darüber hinaus sind Funktionsabfragen in den Teilnehmerendgeräten möglich. Dies bringt die Vorteile mit, daß z. B. eine ständige Funktions- und Zustandskontrolle über Leistungsmerkmale, die in den Teilnehmerendgeräten integriert sind, durchführbar ist.

In weiterer Ausgestaltung der Erfindung können die im Entkopplungsmodul verwendeten Bauelemente zur galvanischen Trennung des Personal Computers von der Kommunikationseinrichtung Optokoppler sein. Dies bringt den Vorteil, daß eine mögliche Potentialdifferenz bezüglich dem Massepotential nicht zur Zerstörung von elektronischen Schaltkreisen im Personal Computer oder in der Kommunikationseinrichtung führt.

Weitere Besonderheiten der Erfindung werden aus der nachfolgenden näheren Erläuterung eines Ausführungsbeispiels anhand der Zeichnungsfiguren ersichtlich.

Es zeigen:
- FIG 1: ein Blockschaltbild einer Schaltungsanordnung,
- FIG 2: ein Ablaufdiagramm eines Programms "Start V.24",
- FIG 3: ein Ablaufdiagramm eines Programms "Transparent",
- FIG 4: ein Ablaufdiagramm eines Programms "Start Device".

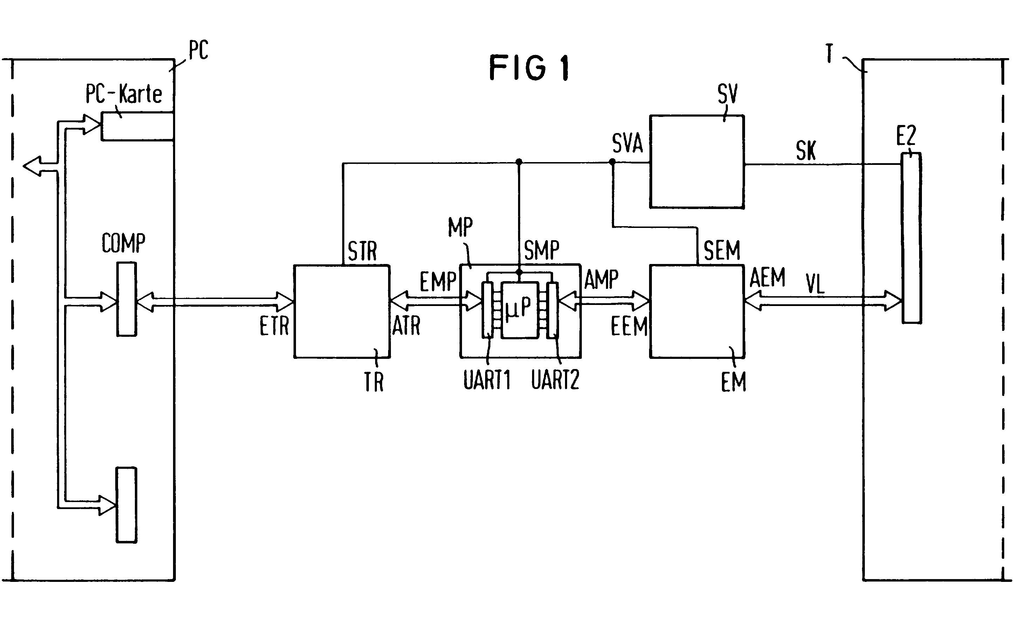

FIG 1 zeigt schematisch in einem zum Verständnis der Erfindung erforderlichem Umfang eine Schaltungsanordnung zur Datenumsetzung bei einer asynchronen bidirektionalen Datenübertragung. Die Schaltungsanordnung wird dabei im wesentlichen durch ein Pegelwandlermodul TR, ein Mikroprozessormodul MP, ein Entkopplermodul EM und ein Stromversorgungsmodul SV gebildet.

Der Eingang ETR des Pegelwandlermodules TR ist mit einer seriellen Datenschnittstelle COMP (COM-Port) des Personal Computers PC verbunden. Diese wird bei einer Anwahl eines Kommunikationsteilnehmers über die Tastatur des Personal Computers PC mit den entsprechenden Hayes-Kommandos beaufschlagt. Der Signalpegel der am Pegelanpassungsmodul TR eingangsseitig anliegenden codierten Daten entspricht einem V.24 Signalpegel. Im Pegelanpassungsmodul TR sind Empfänger-Bausteine eingesetzt, die den V.24-Pegel in den TTL-Pegel und den TTL-Pegel in den V.24-Pegel umsetzen eingesetzt. Hierzu können z.B. Bausteine Max 232 der Firma MAXIM verwendet werden.

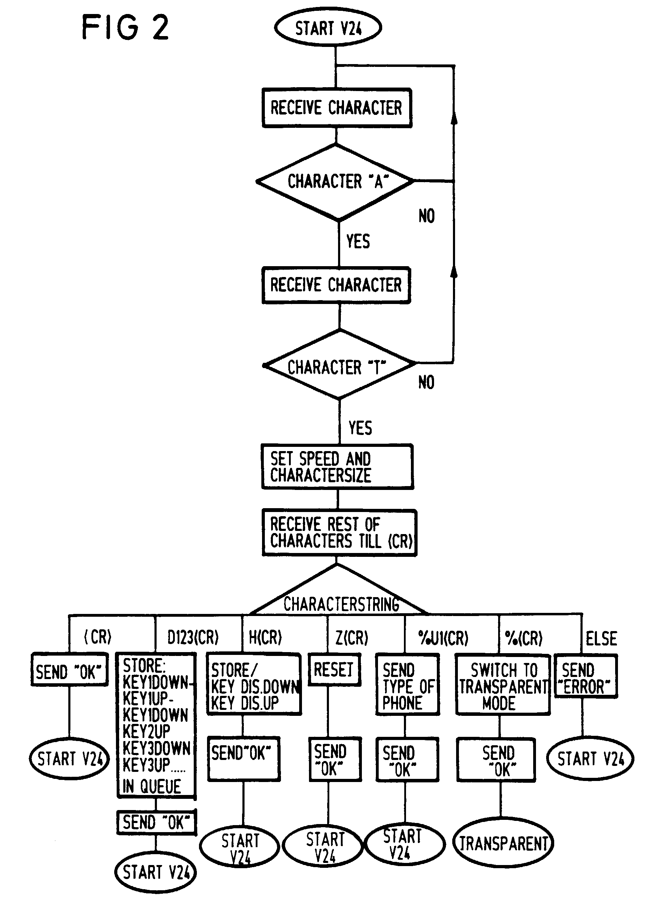

Am Ausgang ATR des Pegelanpaßungsmoduls TR ist der Signalpegel der codierten Daten für den im Mikroprozessormodul MP nötigen Spannungspegel angepaßt. Im Mikroprozessormodul MP sind im wesentlichen zwei Receiver/Transmitter Bausteine UART1, UART2 zur Seriell/Parallel- und Parallel/Seriell-Umsetzung von Datenströmen sowie eine Steuereinheit µP zur Verarbeitung von Datenwörtern angeordnet. Als Steuereinrichtung µP kann ein Single-Chip Processor, z.B. 80C51 der Fa. INTEL oder ein 80C31 mit zusätzlichem EPROM z.B. 27C256, eingesetzt sein. Durch den ersten UART1 Baustein werden die am Eingang EMP des Mikroprozessormduls MP anliegenden seriellen Daten in parallele Datenwortformate umgesetzt. Als UART1, zur Verbindung zum PC, wird ein eigenständiger Baustein wie z.B. der UART SCC2691 der Fa. VALVO benutzt. Die Steuereinheit µP interpretiert die in Datenwörtern vorliegenden Daten. Entsprechend dem Ausbau oder einer Produktlinie der Kommunikationseinrichtung T (z.B. HI-COM, SET 451, 551, 751) setzt die Steuereinheit µP des Mikroprozessormoduls MP die vom Personal Computer PC gesendeten Daten, beispielsweise die Hayes-Kommandos, in Impulsfolgen um. Diese Impulsfolgen entsprechen den Impulsfolgen, die durch Betätigung von Funktionstasten, z.B. Wähltaste oder Speichertasten an der Kommunikationseinrichtung T initialisiert werden (siehe FIG 2, 3, 4).

In der Teilnehmerendeinrichtung T werden die vom Personal Computer PC gesendeten Daten, dann jeweils so weiterverarbeitet, als ob sie durch direktes Betätigen der Funktionstasten entstanden wären.
Die parallel vorliegenden decodierten und angepaßten Daten werden durch einen zweiten Receiver/Transmitter UART 2 in einen seriellen Datenstrom umgesetzt.
Die am Ausgang des Mikroprozessormoduls MP anliegenden Steuersignale werden über ein Entkopplungsmodul EM zur seriellen Datenschnittstelle E2, die als Erweiterungsstelle normalerweise zum Anschluß eines Beistellgerätes vorgesehen ist, an das Teilnehmerendgerät T weitergeleitet. Die E2-Datenschnittstelle ist auf der von INTEL definierten Kommunikation zwischen mehreren Prozessoren 80C51 aufgebaut. Das Verfahren beruht auf einer 9-Bit Übertragung, wobei ein Bit zur Unterscheidung zwischen Adress- oder Daten-Information dient. In einer weiteren Ausgestaltung kann der Schaltkreis des zweiten Receiver/Transmitters UART2 in der 80C51 Steuereinheit µP integriert sein. Die Datenleitungen zwischen dem Eingang EEM und dem Ausgang AEM des Entkopplermoduls EM werden durch optoelektrische Bauelemente, beispielsweise Optokopler, galvanisch getrennt. Die galvanische Trennung zwischen Personal Computer PC und Teilnehmerendgerät T wäre ebenso im Pegelwandlermodul TR möglich. Je nachdem ob die galvanische Trennung auf der Datenschnittstellenseite E2 des Teilnehmerendgerätes T oder nach der V.24 Schnittstelle des Personal Computers PC erfolgt, ist die 5 Volt Versorgung oder nur die Versorgung der Pegelwandlerbausteine galvanisch von der Leitungs-Speisung getrennt. Zur galvanischen Trennung der elektrischen Signale, werden z.B. Optokoppler mit der Bezeichnung HCPL 2200 eingesetzt. Das Pegelwandler-, Mikroprozessor- und das Entkopplungsmodul sind jeweils durch Leitungen STR,SVA; SMP,SVA; SEM, SVA mit dem Stromversorgungsmodul SV verbunden. Über eine weitere Verbindung SK ist das Stromversorgungsmodul SV mit der Kommunikationseinrichtung T verbunden. Über diese Verbindung SK ist das Stromversorgungsmodul SV mit der aus einer Telephonanschlußleitung stammenden Betriebsspannung verbunden. Das Stromversorgungsmodul SV transformiert entsprechend den angeschlossenen Modulen die Betriebsspannung auf die jeweils nötige Betriebsspannung in den angeschlossenen Modulen. Das Stromversorgungsmodul SV besteht aus einem DC/DC-Konverter, der aus der Telefonleitungsspannung 5V zur Versorgung der elektrischen Komponenten erzeugt. Als DC/DC-Kontroller können diskrete Bauelemente oder ein integrierter Baustein wie z.B. der Baustein PSB212OP der Firma Siemens eingesetzt werden.

In FIG 2 ist schematisch ein Ablaufdiagramm eines Programms "Start V.24" dargestellt. Durch dieses Programm werden Daten, beispielsweise von einer Speichereinheit eines Personal Computers PC über eine Datenschnittstelle COMP ausgelesen und an ein Mikroprozessormodul MP weitergeleitet. In dem Mikroprozessormodul MP werden die Daten ausgewertet und ein Seriell/Parallel-Umsetzer UART1 eingestellt. Das im Mikroprozessormodul MP implimentierte Programm "Start V.24" frägt solange den von der Datenschnittstelle COMP des Personal Computers PC kommenden Datenstrom ab, bis z.B. das Datenwort "A" an den Eingang des Mikroprozessormoduls MP anliegt. Nach Auswertung des Datenwortes führt der Programmablauf zu einer nachfolgenden Verzweigungseinrichtung. Folgt als weiteres Datenwort z.B. ein "T", so wird aus der empfangenen Datenwortsequenz "AT" eine Übertragungsgeschwindigkeit (z.B. 300 bis 9600 bit/s), eine Datenwortlänge (z.B. 8 bit) sowie ein Parity-Verfahren erkannt und der UART entsprechend eingestellt. Erfolgt nach der Eingabe des empfangenen Datenwortes "A" eine andere Datenworteingabe, springt das Programm an seine Anfangsadresse zurück. Die Prozedur der Datenworteingabe erfolgt solange, bis die Datenwortsequenz "AT" auftritt. Nachdem alle den Seriell/Parallel-Umsetzer UART1 einstellenden Daten empfangen, und durch eine Zeilenendemarke [ CR ] abgeschlossen wurden, wird durch weitere Datenwörter die Funktion des Mikroprozessormoduls MP jeweils näher bestimmt. Nachfolgende Datenwortfolgen werden von dem Mikroprozessormodul MP empfangen und interpretiert. Im einzelnen sind dies folgende Datenwortfolgen die eine Verzweigung des Programms "START V.24" bewirken:

Eingabe der Zeilenendemarke [CR]: Mit diesem Leerkommando kann festgestellt werden, ob die Kommunikation zwischen dem Personal Computer PC und dem Mikroprozessormodul MP funktioniert.

Eingabe der Datenwortfolge d 123 [CR]:
Bei Eingabe des Datenwortes 1 (Wählziffer 1) wird ein weiteres Datenwort, das den Beginn eines Tastendrucks der "Wähltaste 1" und ein zweites Datenwort, daß das Ende des Tastendrucks emuliert, in einer Warteschlange einer Speichereinheit des Mikroprozessormoduls MP abgespeichert. Der gleiche Speichervorgang geschieht für die "Wählziffer 2" und die "Wählziffer 3".

Eingabe einer Datenwortfolge h [CR ]:
Nach Eingabe dieser Datenwortfolge erfolgt ein Verbindungsabbau. Dabei wird ein Datenwort, das zu Beginn das Ende des Tastendrucks einer Trenntaste emuliert, in die Warteschlange der Speichereinheit des Mikroprozessormoduls MP eingereiht.

Eingabe einer Datenwortfolge z [CR ]:
Nach Eingabe dieser Datenwortfolge erfolgt ein Rücksetzen des Mikroprozessormoduls MP.

Eingabe einer Datenwortfolge % ul [CR ]:
Nach Eingabe dieser Datenwortfolge erfolgt die Aufforderung, die Kenndaten des Typs des an eine E2 Datenschnittstelle angeschlossenen Telekommunikationsgerätes T an den PC weiterzuleiten.

Nach den oben aufgeführten Datenfolgen erfolgt jeweils gesteuert durch die Steuereinheit des Mikroprozessormoduls MP ein Aussenden der Datenwortfolge "OK" (Kommando akzeptiert) über die Datenschnittstelle COMP zum Personal Computer PC. Danach beginnt die Ablaufroutine des Programms "START V.24" wieder bei ihrer Startadresse.

Eingabe einer Datenwortfolge % u [CR ]:
Nach Eingabe dieser Datenwortfolge wird das Mikroprozessormodul in einen - transparenten Mode - geschaltet. Nach Aussenden der Zeichenfolge "OK" verzweigt das Programm "START V.24" in ein, den transparenten Mode, ausführendes Programm "Transparent".

Erfolgt eine nicht definierte Eingabe einer Datenwortfolge, so wird der Benutzer durch eine Fehleranzeige "ERROR", z.B. an einem Datensichtgerät des Personal Computers PC, aufmerksam gemacht.

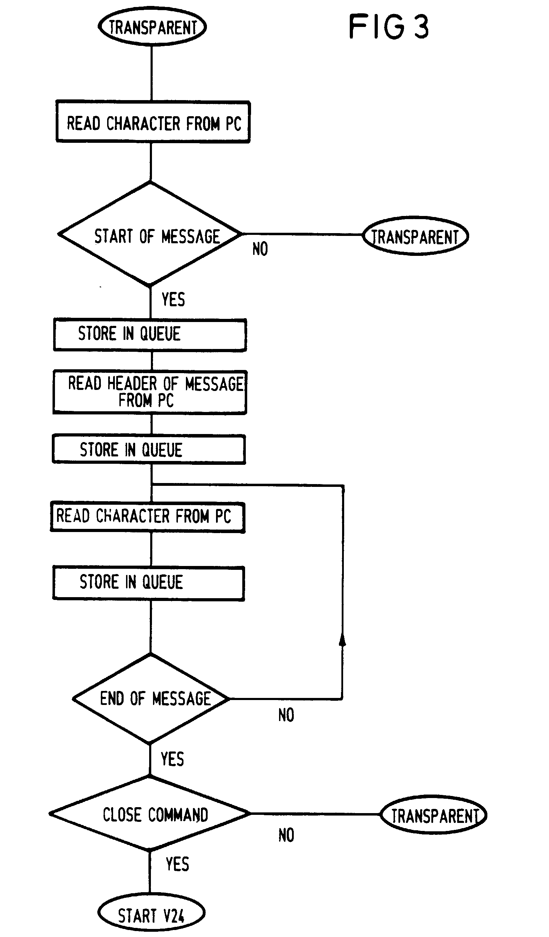

FIG 3 gibt einen Programmablauf eines Programms "Transparent" wieder. In einem ersten Programmschritt wird ein Datenwort von der Datenschnittstelle COMP des Personal Computers PC gelesen. Ist dieses Datenwort nicht ein Beginn einer transparenten Datenwortfolge, so wird an den Programmanfang zurückgesprungen und auf das nächste Datenwort gewartet. Ist das Datenwort ein "Beginnzeichen" für zu sendende Datenwörter (Startinformation, Nachricht), wird es in einer Warteschlange einer Speichereinheit des Personal Computers PC gespeichert und die anschließend vom PC gesendeten Datenwörter als Startinformationen interpretiert und ebenfalls in der Warteschlange gespeichert. Danach werden die dann folgenden Datenwörter (Nachricht) empfangen und gespeichert, bis das Ende der vom PC gesendeten Nachricht erkannt wird. Ist die Speicherkapazität der Warteschlange in der Speichereinheit des Mikroprozessormoduls MP erschöpft, so wird die Steuereinheit des Personal Computers PC veranlaßt, den Datenstrom zu unterbrechen, bis wieder Speicherkapazität in der Warteschlange vorhanden ist. Ist das empfangene Datenwort ein Kommando zum Beenden des - Transparent Mode - so wird zum Programmstart des Programms "Start V.24" verzweigt, ansonsten wird an die Startadresse des Programms "Transparent" gesprungen, um die nächsten Datenwörter zu empfangen.

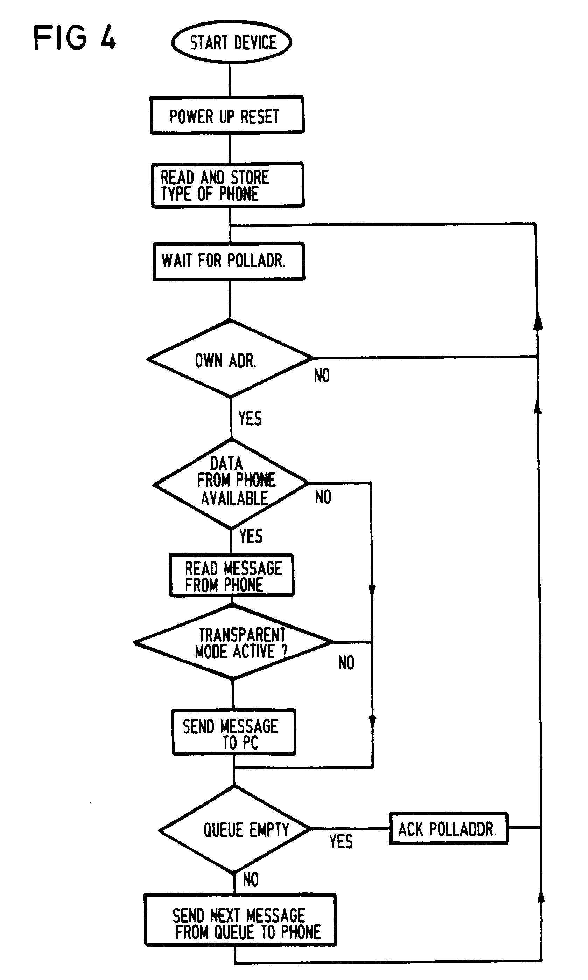

FIG 4 gibt einen Programmablauf eines Programms "Start Device" wieder, das einen Adressen- oder Datenaustausch zwischen dem Mikroprozessormodul MP und der E2 Datenschnittstelle der Telekommunikationseinrichtung T steuert. Das Programm "Start Device" beginnt mit einem Programmteil "Power Up Reset", das ein Aktivieren der V.24- und der E2 Schnittstelle bewirkt. Daran anschließend werden Daten des an die Schaltungsanordnung (s. FIG 1) angeschlossenen Telekommunikationseinrichtung T (Telefontyps) gelesen und in einer Speichereinheit des Mikroprozessormoduls MP abgespeichert. Eine daran anschließende Programmverzweigung bewertet die von der Telekommunikationseinrichtung T kommenden Polladressen aus. Im nein-Zweig wartet das Programm auf die nächste Polladresse. Im ja-Zweig wird gefragt, ob den Adressen Daten folgen. Wenn den Adressen Daten folgen, werden diese gelesen und im Fall des transparenten Modus an den PC weitergeleitet, ist der - Transparent Modus - in dem Mikroprozessormodul MP nicht aktiv, wird dieser Programmteil übersprungen. In einer an diesem Programmmodul anschließenden Programmverzweigungseinheit wird geprüft, ob aus der Warteschlange, der Speichereinheit bereits alle Datenwörter ausgelesen sind. Im nein-Zweig werden die Datenwörter zur Telekommunikationseinrichtung T gesendet. Ist die Warteschlange der Speichereinheit bereits vollständig ausgelesen, so wird im JA-Zweig der Empfang der Datenwörter von der Telekommunikationseinrichtung T quittiert. Nach Ausführung des Programmschrittes in dem nein- oder ja-Zweig wartet das Programm auf die nächste Polladresse.

## Patentansprüche

1. Schaltungsanordnung zur Datenumsetzung bei einer Datenübertragung zwischen einer seriellen Datenschnittstelle (COMP) eines Personal Computers (PC) und einer seriellen Datenschnittstelle (E2) einer Kommunikationseinrichtung (T),
**gekennzeichnet durch**,
a) ein Mikroprozessormodul (MP), das zwischen einem Pegelwandler- (TR) und einem Entkopplungsmodul (EM) angeordnet ist, mit einem eingangsseitig angeordneten Seriell/Parallel-Umsetzer (UART1), einem ausgangsseitig angeordneten Parallel/Seriell-Umsetzer(UART2) und einer Steuereinrichtung (µP) zur Umwandlung von Daten nach einem vorgegebenen Schema,
b) ein Pegelwandlermodul (TR), das eingangsseitig (ETR) mit der seriellen Datenschnittstelle (COMP) des Personal Computers (PC) verbunden ist.
c) ein Entkopplungsmodul (EM), zur galvanischen Trennung der Kommunikationseinrichtung (T) vom Personal Computer (PC) das ausgangsseitig mit der seriellen Datenschnittstelle (E2) der Kommunikationseinrichtung (T) verbunden ist.

2. Schaltungsanordnung nach Anspruch 1,
**dadurch gekennzeichnet**,
daß der Eingang (EMP) des Mikroprozessormoduls (MP) mit Daten, die den Hayes-Kommandos entsprechen, beaufschlagbar ist, und diese Daten durch das Mikroprozessormodul (MP) in eine von der Kommunikationseinrichtung (T) weiter verwertbare Impulsfolge umsetzbar sind.

3. Schaltungsanordnung nach Anspruch 1,
**dadurch gekennzeichnet**,
daß das Mikroprozessormodul (MP) durch einen Befehlsmodus transparent schaltbar ist.

4. Schaltungsanordnung nach Anspruch 1,
**dadurch gekennzeichnet**,
daß im Entkopplungsmodul (EM) optoelektrische Bauelemente, insbesondere Optokoppler, angeordnet sind.

5. Schaltungsanordnung nach Anspruch 1,
**dadurch gekennzeichnet**,
daß ein Stromversorgungsmodul (SV) zur Speisung des Pegelwandler-(TR) , des Mikroprozessor- (MP) und des Entkopplungsmoduls (EM) eine galvanische Trennung zu dem Bezugspotential der Kommunikationseinrichtung (T) aufweist.

## Claims

1. Circuit arrangement for data conversion during a data transmission between a serial data interface (COMP) of a personal computer (PC) and a serial data interface (E2) of a communications device (T), characterized by
a) a microprocessor module (MP), which is arranged between a level converter (TR) and a decoupling module (EM), and has a serial/parallel converter (UART1) arranged on the input side, a parallel/serial converter (UART2) arranged on the output side and a control device (µP) for the conversion of data according to a prescribed scheme,
b) a level converter module (TR), which is connected on the input side (ETR) to the serial data interface (COMP) of the personal computer (PC),
c) a decoupling module (EM) for the electrical isolation of the communications device (T) from the personal computer (PC) , which module is connected on the output side to the serial data interface (E2) of the communications device (T).

2. Circuit arrangement according to Claim 1, characterized in that the input (EMP) of the microprocessor module (MP) can have applied to it data which correspond to the Hayes commands, and these data can be converted by the microprocessor module (MP) into a pulse train which can be utilized further by the communications device (T).

3. Circuit arrangement according to Claim 1, characterized in that the microprocessor module (MP) can be switched to transparent mode by a command mode.

4. Circuit arrangement according to Claim 1, characterized in that optoelectric components, in particular optocouplers, are arranged in the decoupling module (EM).

5. Circuit arrangement according to Claim 1, characterized in that a power supply module (SV) for feeding the level converter module (TR), the microprocessor module (MP) and the decoupling module (EM) has electrical isolation from the reference-earth potential of the communications device (T).

## Revendications

1. Montage de conversion de données lors d'une transmission de données entre une interface de données sérielle (COMP) d'un ordinateur personnel (PC) et d'une interface de données sérielle d'un dispositif (T) de communication,
caractérisé par
a) un module (MP) de microprocesseur, qui est disposé entre un module (TR) de conversion de niveau et un module (EM) de découplage, comportant un convertisseur (UART1) série-parallèle disposé en entrée, un convertisseur (UART2) parallèle/série disposé en sortie et un dispositif (µP) de commande pour la conversion de données suivant un schéma prescrit,
b) un module (TR) de conversion d'un niveau, qui est relié en entrée (ETR) à l'interface (COMP) de données sérielle de l'ordinateur personnel (PC),
c) un module (EM) de découplage, pour l'isolation galvanique du dispositif (T) de communication par rapport à l'ordinateur personnel (PC), qui est relié en sortie à l'interface (E2) de données sérielle du dispositif (T) de communication.

2. Montage suivant la revendication 1,
caractérisé en ce que
l'entrée (EMP) du module (MP) de microprocesseur peut être alimentée en données, qui correspondent aux commandes Hayes, et ces données peuvent être converties par le module (MP) de microprocesseur en un train d'impulsions pouvant être exploité postérieurement par le dispositif (T) de communication.

3. Montage suivant la revendication 1,
caractérisé en ce que
le module (MP) de microprocesseur peut être branché de manière transparente par un mode d'instruction.

4. Montage suivant la revendication 1,
caractérisé en ce que
il est prévu dans le module (EM) de découplage des composants optoélectroniques, notamment des optocoupleurs.

5. Montage suivant la revendication 1,
caractérisé en ce que
un module (SV) d'alimentation en courant pour l'alimentation du module (TR) de conversion de niveau, du module (MP) de microprocesseur et du module (EM) de découplage a une isolation galvanique par rapport au potentiel de référence du dispositif (T) de communication.
